# EUROPEAN PATENT SPECIFICATION

(11) **EP 1 313 634 B1**
(45) Date of publication and mention of the grant of the patent: **08.08.2007**
(21) Application number: 01980281.8
(22) Date of filing: 27.08.2001
(51) Int. Cl.: B60T 7/10

(54) **AN ACTUATOR UNIT FOR A BRAKING DEVICE, PARTICULARLY FOR A VEHICLE PARKING BRAKE**
BETÄTIGUNGSEINHEIT FÜR EINE BREMSVORRICHTUNG, INSBESONDERE FÜR FAHRZEUGFESTSTELLBREMSE
UNITE D'ACTIONNEMENT POUR DISPOSITIF DE FREINAGE, EN PARTICULIER POUR FREIN DE STATIONNEMENT DE VEHICULE

(30) Priority: 30.08.2000 IT TO20000154 U
(43) Date of publication of application: 28.05.2003
(73) Proprietor: Sila Holding Industriale S.p.A., 10042 Nichelino(Torino) (IT)
(72) Inventor: MELIS, Salvatore, I-10098 Rivoli (Torino) (IT)
(74) Representative: Fioravanti, Corrado
(86) International application number: PCT/EP2001/009858
(87) International publication number: WO 2002/018188

(56) References cited:
- DE-A- 19 829 514
- FR-A- 2 599 101
- GB-A- 2 304 838
- US-A- 5 251 968

## Description

The present invention relates to an actuator unit for a braking device, particularly for a vehicle parking brake, including a casing for supporting an electric motor and a male-and-female screw unit, in which the male-and-female screw unit comprises a rotatable element connected for rotation with the output shaft of the electric motor and an element which is slidable relative to the casing as a result of the rotation of the rotatable element, the slidable element being associated with a transmission member pivotable relative to the casing and provided with a pair of arms to the ends of which respective brake-operating cables are connected.

An actuator unit of the type mentioned above is described in European patent application EP 472 979. According to this document, the pivotable transmission member, to which a single brake-operating cable is connected, is articulated to a stationary element fixed to the casing which contains the electric motor; the stationary element includes an arcuate toothed sector the teeth of which can be engaged by a pawl articulated to a lever for the manual operation of the parking brake, so that the tension of the operating cable can be selectively controlled by means of the operating lever or by means of the electric motor.

Also German patent application DE-41-29-934 describes an actuator unit of the type defined above, in which two brake-operating cables, which extend transversely relative to the casing containing the electric motor, are connected to the pivotable transmission member. The transmission member is articulated to a portion of the casing separate from the male-and-female screw unit and is connected to that unit by means of an auxiliary rod so that the tension of the braking cables can be varied either as a result of the operation of the electric motor or by acting manually on a crank which is connected to the male-and-female screw unit by means of an auxiliary cable.

An actuator of the type described in the preamble of claim 1 is disclosed in the document DE 198 29 514 A1.

However, the actuator units known from the above-mentioned documents have fairly complex structures in view of the fact that they have to allow the braking device connected to them to be operated either as a result of the operation of the electric motor or as a result of the operation of a manual control member. Because of this structure, they are also bulky and hence unsuitable to be arranged in restricted spaces in a vehicle.

To solve these problems, the subject of the invention is an actuator unit of the type defined at the beginning of the description, characterized in that the transmission member is articulated to the slidable element of the male-and-female screw unit by means of at least one transverse pin, and in that said pin engages a respective axial guide of the casing so that rotation of the slidable element relative to the casing is prevented.

By virtue of this concept, the actuator unit of the invention has a relatively simple structure which makes its operation highly efficient and reliable and which enables its dimensions to be kept compact so that it can easily be arranged in limited spaces in a motor vehicle, for example, in the central tunnel of the body in the vicinity of the front portion of the passenger compartment where the conventional manual unit for operating the parking brakes of motor vehicles are usually housed.

Further characteristics and advantages of the invention will become clearer from the following detailed description, provided purely by way of non-limiting example, with reference to the appended drawings, in which:
Figure 1 is a partially-sectioned, top elevational view of an actuator unit according to the invention,

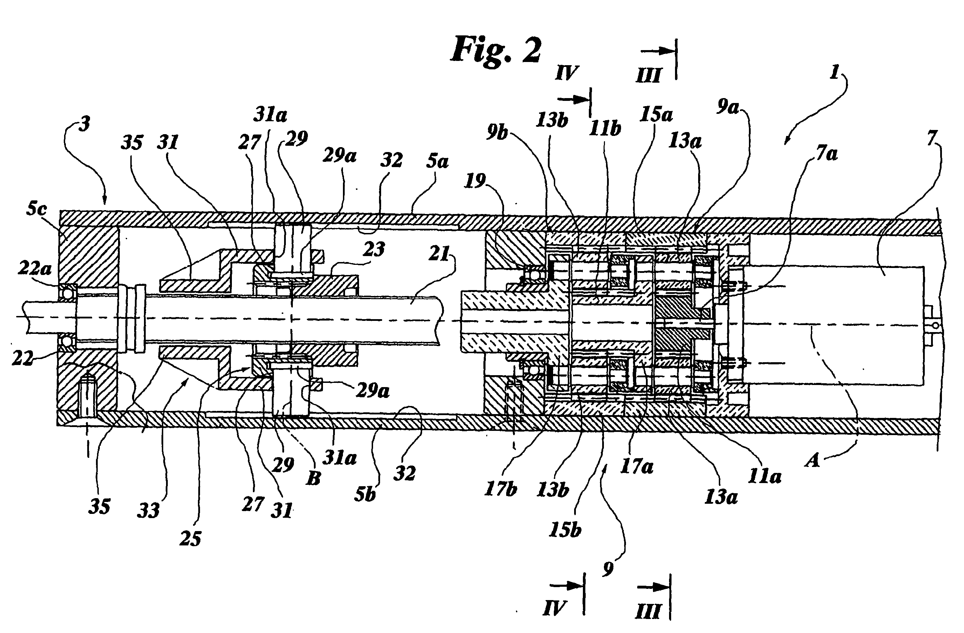

Figure 2 is an elevational view sectioned on the line II-II of Figure 1,

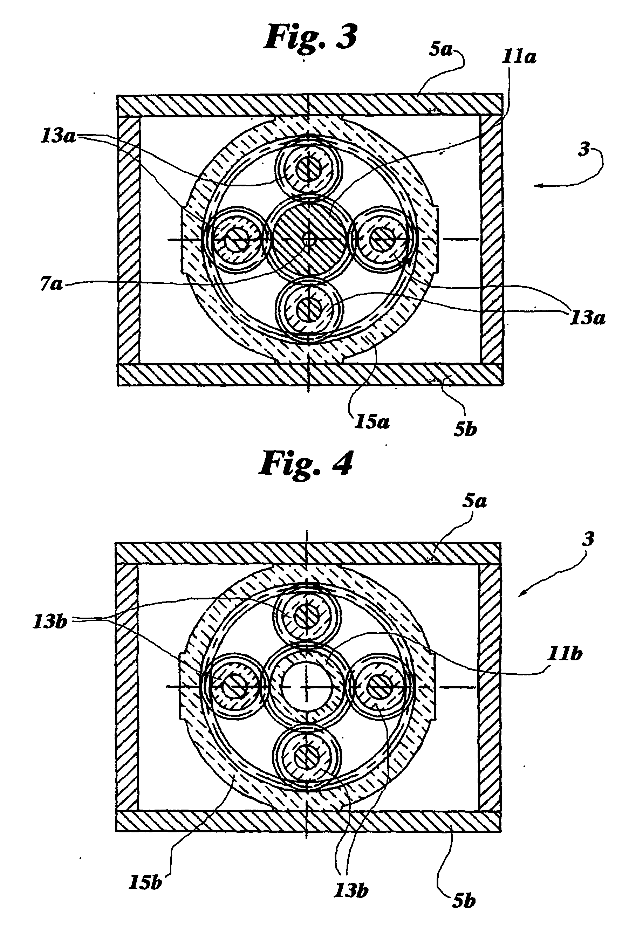

Figures 3 and 4 are cross-sections of the unit of Figure 2, taken on the lines III-III and IV-IV of that drawing, respectively, and
Figure 5 is an enlarged perspective view of a detail indicated by the arrow V in Figure 1.

With reference to the drawings, an actuator unit for a braking device, particularly for a vehicle parking brake, is generally indicated 1.

The unit 1 comprises a generally parallelepipedal casing 3 which includes, with reference to the drawings, a top wall 5a, a bottom wall 5b, parallel to and opposite the wall 5a, and at least one transverse end wall 5c. One or more of the walls of the casing 3, for example the top wall 5a, may be constituted by portions of bodywork panels of the vehicle in which the unit 1 is to be mounted.

Fixed in the portion of the casing 3 remote from the transverse wall 5c is the body of an electric motor 7 from which a respective output shaft 7a, coaxial with a general axis of the unit 1, indicated A in the drawings, extends.

The shaft 7a is connected to a reduction unit 9 coaxial with the axis A and preferably comprising two reduction stages 9a, 9b, arranged in series and conveniently formed by respective reducers of the type with epicyclic gear trains.

In particular, the shaft 7a of the motor 7 is keyed in a central hole of a gear 11a which constitutes the sun gear of the first reduction stage 9a, the teeth of which mesh with a plurality of planet gears 13a which in turn mesh with the internal teeth of a ring gear 15a fixed to the casing 3. The shafts of the planet gears 13a are associated with a planet-carrier 17a having a toothed tubular appendix 11b which constitutes the sun gear of the second reduction stage 9b. The teeth of the tubular appendix 11b mesh with the teeth of a plurality of planet gears 13b, which also mesh with the internal teeth of a ring gear 15b, also fixed to the casing 3. The shafts of the planet gears 13b are associated with a planet-carrier 17b mounted for rotation relative to the casing 3 by means of a ball bearing 19.

The two reduction stages 9a and 9b are advantageously constituted by respective substantially identical epicyclic reduction units, which therefore achieve the same reduction ratio. For example, with a reduction ratio of about 3.5 for each reduction stage, the reduction unit 9 achieves a total reduction ratio of about 12. In particular, the gears which constitute the planet gears 13a and 13b are identical and the ring gears 15a and 15b are identical.

A screw 21 coaxial with the axis A is fixed to the planet-carrier 17b and its toothing is meshed with a corresponding toothing of a nut screw 23 surrounding the screw 21. At the end remote from the reduction unit 9, the screw 21 is supported by a ball bearing 22 housed in a respective seat 22a formed in the transverse wall 5c of the casing 3.

The teeth of the screw 21 and of the nut screw 23 may have profiles such as to minimize the friction resulting from the rotation of the screw 21 relative to the nut screw 23, for example trapezoidal profiles. Moreover, an "anti-reverse" device of per se known type and hence not shown in the drawings, that is, a device which can render the movement of the slidable element of the unit irreversible, may be associated with the screw 21 and with the nut screw 23. The male-and-female screw coupling is advantageously of the type with a circulating-ball thread so that the friction between the screw 21 and the nut screw during the rotation of the screw 21 is minimal.

A ring nut 25 is axially connected to the nut screw 23, for example by means of a threaded coupling, towards the end wall 5c. The ring nut 25 has, on diametrally-opposed sides, a pair of fork-shaped axial seats 27, each arranged to house the enlarged head 29a of a respective transverse pin 29, the pins 29 being coaxial with an axis B which intersects the axis A perpendicularly. The end of each pin 29 remote from its head 29a engages a respective straight groove 32 formed in the respective top and bottom wall 5a and 5b, so that the unit constituted by the nut screw 23, the ring nut 25 and the respective pins 29 can be subjected solely to axial translational movements along the axis A, as a result of the rotation of the screw 21.

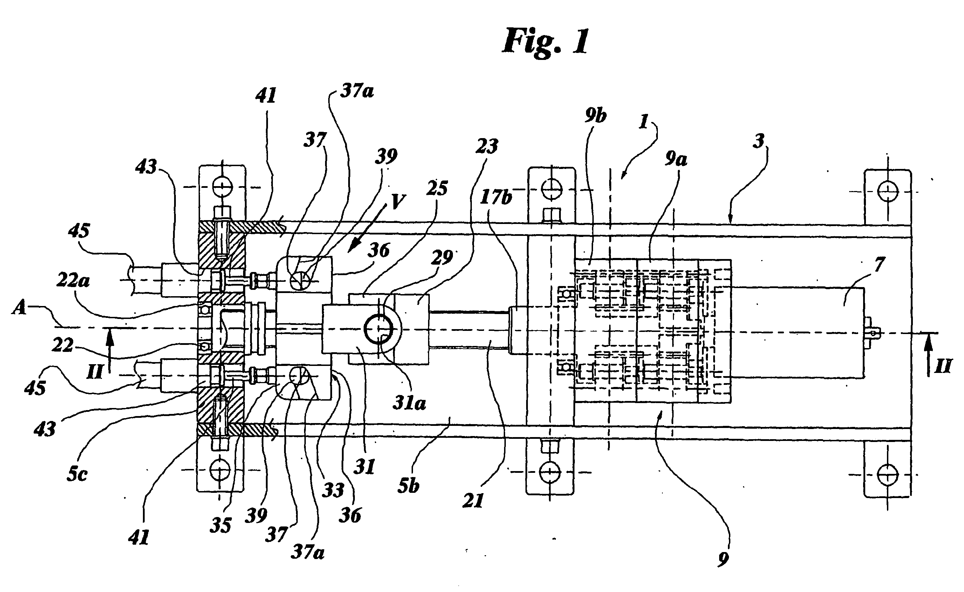

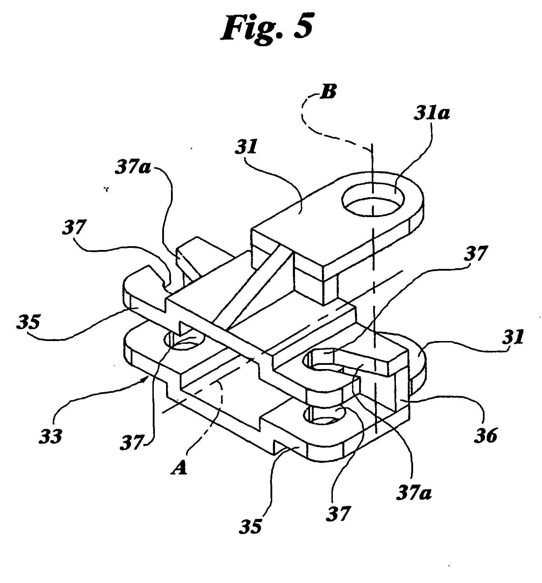

Associated with the pair of pins 29 is a pivotable member 33 which comprises a pair of lugs 31 in which there are formed respective holes 31a, in which the pins 29 can be inserted so that the member 33 can pivot about the axis B. The member 33 has a pair of shaped plates 35, that is, an upper plate and a lower plate with reference to the drawings, which are connected to one another by means of a pair of transverse portions 36 parallel to the axis B and arranged so as not to interfere with the screw 21. Two pairs of aligned holes 37 are formed in the shaped plates 35, each pair of aligned holes 37 being spaced both from the axis A and from the axis B so that the plates 35 constitute a pair of arms each provided with a pair of holes 37. The holes 37 of the same shaped plate 35, for example the upper plate with reference to Figures 1 and 5, both have respective diagonal openings 37a for the insertion, in the respective pair of aligned holes 37, of a terminal barrel 39 having a diameter corresponding to that of the holes 37 and fixed to one end of a flexible cable 41, the other end of which is connected, in known manner, to a movable braking member of a wheel of the vehicle.

The two flexible cables 41 extend through respective holes 43 formed parallel to the axis A in the transverse wall 5c of the casing 3 and are arranged so as to be slidable in respective sheaths 45 each having one end abuting the outer surface of the wall 5c, so that the wall 5c acts as a reaction plate for the sheaths 45.

By virtue of the presence of the transverse pins 29 and of their engagement in the grooves 32, as stated above, the nut screw 23 is moved always parallel to the channels 32, and hence to the axis A, as a result of the rotation of the screw 21. The pivoting member 33 is mounted on the same pins 29, enabling the nut screw 23 to be connected to both of the flexible cables 41, each of which can bring about the braking of a respective wheel of the vehicle. Since the member 33 is pivotably mounted about the pins 29, and hence about the axis B, any small non-uniformities in the lengths of these cables or any differences in the play which may arise in the braking devices associated with the cables 41 as a result of the operation of the unit 1 are compensated for automatically so that the unit according to the invention always enables a balanced and uniform braking of the associated wheels to be achieved by the cables 41.

Devices of per se known type, such as force sensors or systems for bringing about automatic operation of the brakes when the engine of the vehicle is turned off, or devices for the manual release of the braking system in the event of an electrical breakdown, may be associated with the unit according to the invention.

## Claims

1. An actuator unit for a braking device, particularly for a vehicle parking brake, including a casing (3) for supporting an electric motor (7) and a male-and-female screw unit (21, 23), in which the male-and-female screw unit comprises a rotatable element (21) connected for rotation with the output shaft (7a) of the electric motor (7) and an element (23, 25) which is slidable relative to the casing (3) as a result of the rotation of the rotatable element (21), the slidable element (23, 25) being associated with a transmission member (33) pivotable relative to the casing (3) and provided with a pair of arms to the ends of which respective brake-operating cables (41) are connected, wherein
the transmission member (33) is articulated to the slidable element (23, 25) of the male-and-female screw unit (21, 23) by means of at least one transverse pin (29), **characterized in that** said pin (29) engages a respective axial guide (32) of the casing (3) so that rotation of the slidable element (23, 25) relative to the casing (3) is prevented.

2. An actuator unit according to Claim 1, **characterized in that** the transmission member (33) is articulated to the slidable element (23, 25) by means of two transverse and coaxial pins (29) connected on opposite sides of the slidable member (23, 25), each pin (29) engaging a respective axial guide (32) of the casing (3).

3. An actuator unit according to Claim 2, **characterized in that** each of the transverse pins (29) has an enlarged head (29a) engaged in a corresponding fork-shaped seat (27) of the slidable element (23, 25).

4. An actuator unit according to any one of Claims 1 to 3, **characterized in that** the rotatable element (21) of the male-and-female screw unit is a screw (21) coaxial with the output shaft (7a) of the electric motor (7), the slidable element (23) being a internally-threaded member surrounding said screw (21).

5. An actuator unit according to Claim 4, **characterized in that** the screw (21) is supported by a rolling-contact bearing (22) fitted in a seat (22a) formed in a transverse wall (5c) of the casing (3) disposed at the end remote from the electric motor (7).

6. An actuator unit according to Claim 5, **characterized in that** said transverse wall (5c) of the casing (3) has the function of a reaction plate for sliding sheaths (45) of the operating cables (41).

7. An actuator unit according to any one of Claims 1 to 6, **characterized in that** the male-and-female screw unit (21, 23) is of the type with a circulating-ball thread.

8. An actuator unit according to any one of Claims 1 to 7, **characterized in that** a reduction unit (9), coaxial with the axis (A) of the male-and-female screw unit (21, 23) and of the output shaft (7a), is interposed between the output shaft (7a) of the electric motor (7) and the rotatable element (21) of the male-and-female screw unit (21, 23).

9. An actuator unit according to Claim 8, **characterized in that** the reduction unit (9) is of the epicyclic type with two stages (9a, 9b).

10. An actuator unit according to Claim 9, **characterized in that** the output shaft of the electric motor (7) is connected for rotation with a first sun gear (11a) of the first stage (9a) of the reduction unit (9), meshing with first planet gears (13a) which are meshed with a first internally-toothed ring gear (15a), the first planet gears (13a) having respective rotation axes associated with a first planet-carrier (17a) to which a second sun gear (11b) of the second stage (9b) of the reduction unit (9) is fixed, the second sun gear (11b) meshing with second planet gears (13b) which are meshed with a second internally-toothed ring gear (15b), the second planet gears having respective rotation axes associated with a second planet-carrier (17b) to which the screw (21) of the male-and-female screw unit (21, 23) is fixed.

11. An actuator unit according to Claim 10, **characterized in that** said first and second epicyclic reduction units (9a, 9b) are substantially identical to one another.

12. An actuator unit according to any one of Claims 1 to 11, **characterized in that** the electric motor (7), the reduction unit (9), the screw (21) and the nut screw (23) are mounted coaxially on a general axis (A) of the casing (3), the ends of said operating cables (41), which are connected to the nut screw (23) by means of the transmission member (33), being arranged parallel to the general axis (A) of the casing.

## Patentansprüche

1. Betätigungseinheit für eine Bremsenvorrichtung, im Besonderen für die Feststellbremse eines Fahrzeugs, wobei die Betätigungseinheit ein Gehäuse (3) für die Aufnahme eines Elektromotors (7) sowie eine Schraubeneinheit (21, 23) mit einem Außen/Innen-Gewinde aufweist, wobei die Schraubeneinheit mit einem Außen/Innen-Gewinde ein drehbares Element (21), das mit der Abtriebswelle (7a) des Elektromotors (7) für eine Drehung verbunden ist, sowie ein Element (23, 25) aufweist, das infolge der Drehung des drehbaren Elements (21) relativ zum Gehäuse (3) verschiebbar ist, wobei dem verschiebbaren Element (23, 25) ein Übertragungselement (33) zugeordnet ist, das relativ zum Gehäuse (3) verschwenkbar und mit einem Paar von Armen versehen ist, an deren Enden entsprechende Kabel (41) für die Betätigung der Bremsen befestigt sind, wobei das Übertragungselement (33) am verschiebbaren Element (23, 25) der Schraubeneinheit (21, 23) mit einem Außen/Innen-Gewinde in zumindest einem Querzapfen (29) gelenkig gelagert ist, **dadurch gekennzeichnet, dass** der Zapfen (29) in eine entsprechende axiale Führung (32) des Gehäuses (3) so eingreift, dass eine Drehung des verschiebbaren Elements (23, 25) relativ zum Gehäuse (3) verhindert wird.

2. Betätigungseinheit gemäß Anspruch 1, **dadurch gekennzeichnet, dass** das Übertragungselement (33) am verschiebbaren Element (23, 25) in zwei quer und koaxial verlaufenden Zapfen (29) gelenkig gelagert ist, die an gegenüber liegenden Seiten des verschiebbaren Elements (23, 25) befestigt sind, wobei jeder Zapfen (29) mit einer entsprechenden axialen Führung (32) des Gehäuses (3) in Eingriff steht.

3. Betätigungseinheit gemäß Anspruch 2, **dadurch gekennzeichnet, dass** jeder der Querzapfen (29) einen vergrößerten Kopf (29a) besitzt, der mit einem entsprechenden gabelförmigen Sitz (27) des verschiebbaren Elements (23, 25) in Eingriff steht.

4. Betätigungseinheit gemäß irgendeinem der Ansprüche 1 bis 3, **dadurch gekennzeichnet, dass** das drehbare Element (21) der Schraubeneinheit mit einem Außen/Innen-Gewinde aus einer Schraube (21) besteht, die koaxial mit der Abtriebswelle (7a) des Elektromotors (7) verläuft, wobei das verschiebbare Element (23) aus einem Element mit einem Innengewinde besteht, das die Schraube (21) umschließt.

5. Betätigungseinheit gemäß Anspruch 4, **dadurch gekennzeichnet, dass** die Schraube (21) in einem Lager (22) mit rollender Berührung gelagert ist, das in einen Sitz (22a) eingesetzt ist, der in einer Querwand (5c) des Gehäuses (3) ausgebildet ist, die an jenem Ende angeordnet ist, das vom Elektromotor (7) entfernt liegt.

6. Betätigungseinheit gemäß Anspruch 5, **dadurch gekennzeichnet, dass** die Querwand (5c) des Gehäuses (3) als Gegenplatte für Gleithüllen (45) der Betätigungskabel (41) dient.

7. Betätigungseinheit gemäß irgendeinem der Ansprüche 1 bis 6, **dadurch gekennzeichnet, dass** die Schraubeneinheit (21, 23) mit einem Außen/Innen-Gewinde eine Einheit mit einer Umlaufkugel-Mutter-Schrauben-Einrichtung ist.

8. Betätigungseinheit gemäß irgendeinem der Ansprüche 1 bis 7, **dadurch gekennzeichnet, dass** eine Reduktionseinheit (9), die koaxial mit der Achse (A) der Schraubeneinheit (21, 23) mit einem Außen/Innen-Gewinde und der Abtriebswelle (7a) liegt, zwischen der Abtriebswelle (7a) des Elektromotors (7) und dem drehbaren Element (21) der Schraubeneinheit mit einem Außen/Innen-Gewinde (21, 23) liegt.

9. Betätigungseinheit gemäß Anspruch 8, **dadurch gekennzeichnet, dass** die Reduktionseinheit (9) ein Planetengetriebe mit zwei Stufen (9a, 9b) ist.

10. Betätigungseinheit gemäß Anspruch 9, **dadurch gekennzeichnet, dass** die Abtriebswelle des Elektromotors (7) für eine Drehung mit einem ersten Sonnenrad (11a) der ersten Stufe (9a) der Reduktionseinheit (9) verbunden ist, das in erste Planetenräder (13a) eingreift, die mit einem ersten innerverzahnten Ringrad (15a) in Eingriff stehen, wobei die ersten Planetenräder (13a) entsprechende Drehachsen besitzen, denen ein erster Planetenradträger (17a) zugeordnet ist, an dem ein zweites Sonnenrad (11b) der zweiten Stufe (9b) der Reduktionseinheit (9) befestigt ist, wobei das zweite Sonnenrad (11b) mit zweiten Planetenrädern (13b) in Eingriff steht, die in ein zweites innenverzahntes Ringrad (15b) eingreifen, wobei die zweiten Planetenräder entsprechende Drehachsen besitzen, die einem zweiten Planetenradträger (17b) zugeordnet sind, an dem die Schraube (21) der Schraubeneinheit (21, 23) mit einem Außen/Innen-Gewinde befestigt ist.

11. Betätigungseinheit gemäß Anspruch 10, **dadurch gekennzeichnet, dass** die erste und die zweite Planeten-Reduktionseinheit (9a, 9b) einander im Wesentlichen identisch sind.

12. Betätigungseinheit gemäß irgendeinem der Ansprüche 1 bis 11, **dadurch gekennzeichnet, dass** der Elektromotor (7), die Reduktionseinheit (9), die Schraube (21) und die Gewindemutter (23) koaxial auf einer Hauptachse (A) des Gehäuses (3) befestigt sind, wobei die Enden der Betätigungskabel (41), die mit der Gewindemutter (23) über das Übertragungselement (33) verbunden sind, parallel zur Hauptachse (A) des Gehäuses angeordnet sind.

## Revendications

1. Unité d'actionneur pour un dispositif de freinage, en particulier pour un frein à main de véhicule, comprenant un boîtier (3) pour supporter un moteur électrique (7) et une unité de vis mâle et femelle (21, 23), dans laquelle l'unité de vis mâle et femelle comprend un élément rotatif (21) connecté pour une rotation avec l'arbre de sortie (7a) du moteur électrique (7) et un élément (23, 25) qui peut coulisser par rapport au boîtier (3) en résultat de la rotation de l'élément rotatif (21), l'élément coulissant (23, 25) étant associé avec un élément de transmission (33) pouvant pivoter par rapport au boîtier (3) et muni d'une paire de bras aux extrémités desquels des câbles d'opération de frein respectifs (41) sont connectés,
l'élément de transmission (33) étant articulé sur l'élément coulissant (23, 25) de l'unité de vis mâle et femelle (21, 23) au moyen d'au moins une broche transversale (29), **caractérisée en ce que** ladite broche (29) engage un guide axial respectif (32) du boîtier (3) de telle sorte que la rotation de l'élément coulissant (23, 25) par rapport au boîtier (3) est évitée.

2. Unité d'actionneur selon la revendication 1, **caractérisée en ce que** l'élément de transmission (33) est articulé sur l'élément coulissant (23, 25) au moyen de deux broches transversales et coaxiales (29) connectées sur les côtés opposés de l'élément coulissant (23, 25), chaque broche (29) engageant un guide axial respectif (32) du boîtier (3).

3. Unité d'actionneur selon la revendication 2, **caractérisée en ce que** chacune des broches transversales (29) a une tête agrandie (29a) engagée dans un siège en forme de fourche correspondant (27) de l'élément coulissant (23, 25).

4. Unité d'actionneur selon l'une quelconque des revendications 1 à 3, **caractérisée en ce que** l'élément rotatif (21) de l'unité de vis mâle et femelle est une vis (21) coaxiale avec l'arbre de sortie (7a) du moteur électrique (7), l'élément coulissant (23) étant un élément fileté de manière interne entourant ladite vis (21).

5. Unité d'actionneur selon la revendication 4, **caractérisée en ce que** la vis (21) est supportée par un palier à contact de roulement (22) ajusté dans un siège (22a) formé dans une paroi transversale (5c) du boîtier (3) disposée au niveau de l'extrémité éloignée du moteur électrique (7).

6. Unité d'actionneur selon la revendication 5, **caractérisée en ce que** ladite paroi transversale (5c) du boîtier (3) a la fonction d'une plaque de réaction pour faire coulisser des gaines (45) des câbles d'opération (41).

7. Unité d'actionneur selon l'une quelconque des revendications 1 à 6, **caractérisée en ce que** l'unité de vis mâle et femelle (21, 23) est du type avec un filetage à circulation de billes.

8. Unité d'actionneur selon l'une quelconque des revendications 1 à 7, **caractérisée en ce qu'**une unité de réduction (9) coaxiale avec l'axe (A) de l'unité de vis mâle et femelle (21, 23) et de l'arbre de sortie (7a) est interposée entre l'arbre de sortie (7a) du moteur électrique (7) et l'élément rotatif (21) de l'unité de vis mâle et femelle (21, 23).

9. Unité d'actionneur selon la revendication 8, **caractérisée en ce que** l'unité de réduction (9) est du type planétaire avec deux étages (9a, 9b).

10. Unité d'actionneur selon la revendication 9, **caractérisée en ce que** l'arbre de sortie du moteur électrique (7) est connecté pour une rotation avec un premier planétaire (11 a) du premier étage (9a) de l'unité de réduction (9), en engrenant avec des premiers satellites (13a) qui sont engrenés avec une première couronne dentée de manière interne (15a), et les premiers satellites (13a) ayant des axes de rotation respectifs associés avec un premier porte-satellite (17a) sur lequel un deuxième planétaire (11b) du deuxième étage (9b) de l'unité de réduction (9) est fixé, le deuxième planétaire (11b) s'engrenant avec des deuxièmes satellites (13b) qui sont engrenés avec une deuxième couronne dentée de manière interne (15b), les seconds satellites ayant des axes de rotation respectifs associés avec un deuxième porte-satellite (17b) sur lequel la vis (21) de l'unité de vis mâle et femelle (21, 23) est fixée.

11. Unité d'actionneur selon la revendication 10, **caractérisée en ce que** lesdites premières et secondes unités et réduction planétaire (9a, 9b) sont sensiblement identiques l'une à l'autre.

12. Unité d'actionneur selon l'une quelconque de revendications 1 à 11, **caractérisée en ce que** le moteur électrique (7), l'unité de réduction (9), la vis (21) et la vis à écrou (23) sont montés de manière coaxiale sur un axe général (A) du boîtier (3), les extrémités desdits câbles d'opération (41), qui sont connectées à la vis à écrou (23) au moyen de l'élément de transmission (33), étant agencée de manière parallèle à l'axe général (A) du boîtier
